# EUROPÄISCHE PATENTSCHRIFT

(11) **EP 4 326 424 B1**
(45) Veröffentlichungstag und Bekanntmachung des Hinweises auf die Patenterteilung: **23.09.2026**
(21) Anmeldenummer: 22723032.3
(22) Anmeldetag: 05.04.2022
(51) Int. Cl.: B01D 61/18, B01D 63/02, B01D 63/04, B01D 65/02, B01D 65/08

(54) **MEMBRANFILTER UND VERFAHREN ZUM FILTERN**
MEMBRANE FILTER AND FILTERING METHOD
FILTRE À MEMBRANE ET PROCÉDÉ DE FILTRATION

(30) Priorität: 22.04.2021 DE 102021110329
(43) Veröffentlichungstag der Anmeldung: 28.02.2024
(73) Patentinhaber: membion GmbH, 52159 Roetgen (DE)
(72) Erfinder: VOLMERING, Dirk, 52070 Aachen (DE); VOSSENKAUL, Klaus, 52074 Aachen (DE)
(74) Vertreter: Bauer PSU PartG mbB
(86) Internationale Anmeldenummer: PCT/EP2022/058913
(87) Internationale Veröffentlichungsnummer: WO 2022/223278

(56) Entgegenhaltungen:
- WO-A1-2016/064466
- WO-A1-98/47827
- CN-U- 201 850 172
- DE-B3- 102019 129 074
- JP-A- 2019 076 857

## Beschreibung

Die Erfindung betrifft zunächst einen Membranfilter für den Einsatz im getauchten Betrieb zum Filtern einer Flüssigkeit mit Membranelementen und Geysir-Elementen zur pulsweisen Spülung der Membranelemente mit einem Gas, wobei jedes der Membranelemente folgende Merkmale aufweist: in einem Fußelement befestigte Hohlfasermembranen mit jeweils einem Lumen, in das ein flüssiges Permeat aus der Flüssigkeit filtrierbar ist, einen Permeatsammelraum, der mit den Lumen der Hohlfasermembranen verbunden ist zum Sammeln des Permeats aus den Hohlfasermembranen, einen Permeat-Auslass zum Ablassen des Permeats aus dem Permeatsammelraum und ein rohrförmiges Gehäuse, das die Hohlfasermembranen des Membranelementes umgibt und das von dem Permeat-Auslass durchdrungen wird, und wobei die Geysir-Elemente unterhalb der Membranelemente installiert sind und jedes der Geysir-Elemente folgende Merkmale aufweist: einen nach unten offenen Gas-Sammelraum, eine Auslasseinrichtung zum pulsweisen Auslassen des Gases nach oben aus dem Gas-Sammelraum.

Die Erfindung betrifft weiterhin ein Verfahren zum Filtern einer Flüssigkeit in einem in die Flüssigkeit eingetauchten Membranfilter mit Membranelementen und Geysir-Elementen, wobei in jedem der Membranelemente ein flüssiges Permeat aus der Flüssigkeit in ein Lumen von Hohlfasermembranen filtriert wird, die in einem Fußelement befestigt sind, das Permeat aus den Lumen in einem Permeatsammelraum gesammelt wird, ein rohrförmiges Gehäuse die Hohlfasermembranen des Membranelementes umgibt, das Permeat durch das Gehäuse aus dem Permeatsammelraum abgelassen wird und die Hohlfasermembranen durch ein Gas gespült werden, und wobei in jedes der Geysir-Elemente das Gas kontinuierlich eingelassen wird und pulsweise wieder aus dem Geysir-Element ausströmt, indem es zyklisch ein in einem Gas-Sammelraum des Geysir-Elementes befindliches, nach unten durch einen Pegel der Flüssigkeit begrenztes Gasvolumen auffüllt und dabei die Flüssigkeit von oben nach unten aus dem Gas-Sammelraum verdrängt, dann aus dem Gas-Sammelraum nach oben aus dem Geysir-Element ausströmt, während die Flüssigkeit von unten in den Gas-Sammelraum nachströmt bis das Ausströmen des Gases stoppt, und wobei das pulsweise ausströmende Gas von unten in eines der Membranelemente einströmt.

Ein solcher Membranfilter und ein solches Verfahren sind bekannt aus DE 10 2019 129 074 B3.

Der bekannte Membranfilter und das bekannte Verfahren sind konzipiert für die Filtration von Flüssigkeiten mit hohem Feststoffgehalt, wie sie beispielsweise bei Membranbioreaktoren (MBR) in biologischen Kläranlagen anzutreffen sind. Das rohrförmige Gehäuse jedes der Membranelemente bildet dabei eine seitliche Begrenzung für die Membranen und hat zudem den Vorteil, dass das unten in ein Membranelement eingetragene Gas bei seiner Durchströmung des Membranelementes dieses nicht seitlich verlassen kann und dadurch im Membranelement gehalten wird. Dadurch wird die Spülwirkung des Gases besser ausgenutzt. Die im Geysir-Element schlagartig freigesetzte Luft steigt zwischen den Membranen durch den Auftrieb schnell auf, reißt dabei die Flüssigkeit mit nach oben durch die zur Umgebung offene Oberfläche aus dem Membranfilter heraus und reinigt dadurch hochwirksam die Membranen von anhaftenden Verschmutzungen.

Der bekannte Membranfilter ist jedoch in seiner Höhe begrenzt und kann dadurch die oftmals in biologischen Kläranlagen vorhandene Bauhöhe der Schlammbecken, in die die Membranfilter eingetaucht werden nicht ausnutzen. Zudem ist der Energiebedarf für die Bereitstellung der Luft zu Spülzwecken der Membranen jedoch nach wie vor einer der wesentlichen wirtschaftlichen Aspekte beim Betrieb von Membranbioreaktoren, so dass einer Reduzierung dieses Energiebedarfs hohe Bedeutung zukommt.

WO 2016/064466 A (Koch Membrane Systems) beschreibt weitere gattungsgemäße Membranfilter und Verfahren.

Im Hintergrund der Erfindung offenbart DE 10 2013 218 188 B3 einen Membranbioreaktor mit einem strukturierten Fußelement ohne Geysir und US 2009/0194477 A1 (Asahi Kasai), US 10,179,311 B2 (Sumitomo Electric), CN104519984 B (Samsung Cheil Industries), KR 20190002717 A (Mitsubishi Chemical) und WO 2011/028341 A1 (Zenon Technology Partnership) offenbaren jeweils Membranfilter zudem ohne rohrförmiges Gehäuse um die Membranelemente. Aus DE 10 2019 115 265 A1 ist ein Membranelement mit einem rohrförmigen Gehäuse bekannt.

Aus DE 19811 945 A1 und JP H06-67 457 B2 sind Membranfilter zum Betrieb in trockener Aufstellung mit in einem abgeschlossenen rohrförmigen Behälter übereinander angeordneten Membranelementen bekannt, wobei die zu filtrierende Flüssigkeit sowie ein Spülmedium dem Behälter über Rohrleitungen zu- und Permeat und Retentat über andere Rohrleitungen aus dem Membranfilter abgeführt werden. Der Betrieb von Geysir-Elementen mit den typischen, deren technischen Vorteil begründenden hohen Strömungsgeschwindigkeiten ist aufgrund der beschränkten Querschnitte der abführenden Rohrleitungen in trockener Aufstellung nicht sinnvoll.

Weiterhin sind im Hintergrund der Erfindung Membranbioreaktoren mit mehreren übereinander angeordneten Membranelementen mit Plattenmembranen bekannt (Produktbezeichnung SP-Series, Firma Kubota, Japan). Diese haben jedoch keine Geysir-Belüftung, benötigen sehr viel Energie für die Modulbelüftung und haben aufgrund ihrer geringen Packungsdichte einen hohen Platzbedarf.

### Aufgabe

Es ist die Aufgabe der vorliegenden Erfindung, einen Membranfilter vorzuschlagen, der bei geringem apparatetechnischen Aufwand und geringem Platzbedarf den eingetragenen Gasvolumenstrom effektiv zu Spülzwecken der Hohlfasermembranen ausnutzt.

### Lösung

Ausgehend von dem bekannten Membranfilter wird nach der Erfindung vorgeschlagen, dass der Membranfilter Membraneinheiten aufweist, in denen jeweils eines der Geysir-Elemente und darüber mehrere der Membranelemente übereinander angeordnet sind.

Dadurch wird bei dem erfindungsgemäßen Membranfilter bei gleicher Anzahl der Membranelemente die Anzahl der Geysir-Elemente im Vergleich zum bekannten Membranfilter signifikant reduziert, beispielsweise halbiert bei zwei Membranelementen in einer Membraneinheit, bzw. auf ein Drittel reduziert bei drei Membranelementen pro Membraneinheit. Dadurch wird der apparatetechnische Aufwand deutlich reduziert.

Beim erfindungsgemäßen Verfahren zum Filtern einer Flüssigkeit mit diesem Membranfilter durchströmt das Gas Membraneinheiten, in denen jeweils eines der Geysir-Elemente und darüber mehrere der Membranelemente übereinander angeordnet sind.

Das bedeutet, dass bei dem erfindungsgemäßen Membranfilter das aus dem Geysir ausströmende Gas nicht nur durch eines der Membranelemente geleitet wird sondern durch zwei übereinander installierte Membranelemente oder mehr, d.h. die eingetragene Luft wird effektiver zu Spülzwecken der Membranen ausgenutzt, da sie eine sehr viel größere Membranfläche spült.

Ein weiterer Vorteil des erfindungsgemäßen Membranfilters ist die bessere Raumausnutzung der in biologischen Becken von Kläranalgen vorhandenen Beckentiefe durch die übereinander installierten Membranelemente in den Membraneinheiten.

Auch der erfindungsgemäße Membranfilter und das erfindungsgemäße Verfahren sind konzipiert für die Filtration von Flüssigkeiten mit hohem Feststoffgehalt, wie sie beispielsweise bei Membranbioreaktoren (MBR) anzutreffen sind. Dabei werden die Membranfilter in die zu filtrierende Flüssigkeit, in dem Fall beispielsweise in den Schlamm biologischer Kläranlagen, abgetaucht und aus den Membranen wird gereinigtes Wasser als Permeat abgezogen, während die von der Membran zurückgehaltenen Feststoffe im Membranfilter zurückbleiben und daher aus diesem herausgespült werden müssen. Das geschieht in der Regel mit Hilfe von Luft, die von unten in die Membranelemente eingetragen wird.

Durch die pulsweise Spülung der Membranen mit Gas wird einer Verstopfung der Membranen durch abfiltrierte Stoffe entgegengewirkt. Die durch das Geysir-Element im Membranelement generierte pulsierende Zweiphasenströmung aus Luft und zu filtrierender Flüssigkeit hat eine hohe Scherkraft und bewirkt daher eine effektive Spülung der Membranen.

Beim pulsweisen Austreten der Flüssigkeit entstehen höhere Scherkräfte als bei kontinuierlicher Begasung wie sie beispielsweise bei Plattenmembranen eingesetzt wird und gleichzeitig wird eine Kanalbildung der Luft vermieden, d. h. die aufsteigenden Luftblasen müssen sich stets neu formieren und finden dabei immer wieder neue Wege durch den Membranfilter.

Der Membranfilter kann dabei mit verschiedenen Arten von Membranen bestückt sein, die bevorzugt zu den Bereichen der Ultra- oder Mikrofiltrationsmembranen gehören mit Porengrößen, die zwischen 0,02 µm und 1,0 µm liegen. Es können jedoch auch andere Membranen aus den Bereichen Nanofiltration oder Niederdruck-Umkehrosmose eingesetzt werden.

Das Fußelement kann verschiedene Formen annehmen mit beispielsweise rundem oder rechteckigen Querschnitt. Es kann aber auch unterteilt sein in eine definierte Anzahl an Segmenten, die mit den Hohlfasermembranen bestückt sind. Eine solche Gestaltung des Fußelementes wird im Hintergrund der Erfindung beispielsweise in DE 10 2013 218 188 B3 beschrieben. Die Segmente des Fußelementes sind dabei über einen Anker des Fußelementes miteinander verbunden.

In einer einfachen Ausführung des erfindungsgemäßen Membranfilters werden oberhalb eines Geysir-Elementes zwei Membranelemente übereinander installiert.

In einer weiteren Ausführung des erfindungsgemäßen Membranfilters besitzt jedes Membranelement neben einem Fußelement zusätzlich auch ein Kopfelement, in dem die Hohlfasermembranen auch oben befestigt sind. Diese Art von Membranelementen wird auch als "Double-Header-System" bezeichnet. Dabei weisen entweder nur das Fußelement oder nur das Kopfelement oder beide einen Permeatsammelraum auf.

In einem erfindungsgemäßen Membranfilter ist es von Vorteil, wenn das Gehäuse eine seitlich geschlossene Wandung aufweist, d.h. keine Öffnungen im Bereich der Membranen hat. Einzig der Permeat-Auslass wird durch eine seitliche Öffnung durch die Wandung des Gehäuses geführt.

Im Hintergrund der Erfindung wird in DE 10 2019 115 265 A1 ein Membranelement mit einem rohrförmigen Gehäuse beschrieben, wobei der Permeat-Auslass dieses Gehäuse seitlich durchdringt, während die untere Kante des Gehäuses unterhalb des Permeat-Auslasses liegt. Wie DE 10 2019 115 265 A1 zudem zeigt, kann die Öffnung in der Wandung des Gehäuses, durch die der Permeat-Ausauslass geführt wird, auch bis zu der unteren Kante des Gehäuses verlaufen.

In einer vorteilhaften Ausgestaltung eines solchen erfindungsgemäßen Membranfilters sind die Hohlfasermembranen oben einzeln verschlossen und schweben dabei frei in der Flüssigkeit, während die Fixierung der Membranen nur in dem Fußelement erfolgt, in dem die Membranen mit ihrem unteren Ende eingeharzt sind. Derartige Membranelemente werden auch als "Single-Header-Systeme" bezeichnet. Dadurch können Haare und faserige Verbindungen, die in der Flüssigkeit enthalten sind, frei aus dem Membranelement nach oben abgestreift werden und setzen sich nicht oben im Membranelement fest. Gleichzeitig werden durch das Gehäuse die nur unten in dem Fußelement fixierten Membranen seitlich begrenzt und dadurch im Membranelement gehalten, d.h. sie werden an einem Umfallen gehindert und bleiben weitgehend vertikal ausgerichtet.

In einer weiteren Ausgestaltung eines solchen erfindungsgemäßen Membranfilters weist das Fußelement einen rohrförmigen Mantel auf, wobei das Gehäuse des Membranelementes aus dem Mantel und einem Rohr besteht, das oben an den Mantel anschließt. Dies hat konstruktionsbedingte Vorteile beim Anschluss und der Halterung des Membranelementes im Membranfilter, da sowohl Halterungen des Membranelementes als auch dessen Permeat-Auslass am Mantel des Fußelementes ausgebildet sein können, während der rohrförmige Teil des Gehäuses, das die freien Membranen umgibt, aus einem einfachen beispielsweise über Extrusion hergestellten Rohr bestehen kann. Dieses Rohr kann kreisförmige, rechteckige oder alternativ auch andere beliebige Querschnittsformen aufweisen. Der Mantel des Fußelementes wird vorteilhafter Weise an die Querschnittsform des Rohres angepasst, so dass Mantel und Rohr auf einfache Weise zum Gehäuse verbunden werden können.

Im Hintergrund der Erfindung wird eine derartige Ausgestaltung des Fußelementes mit einem Mantel ebenfalls in DE 10 2013 218 188 B3 beschrieben. Dabei sind die Membranen in einem Membranträger des Fußelementes fixiert, das wie oben bereits erwähnt einzelne Segmente aufweist. Der Mantel und der Membranträger des Fußelementes sind über Anker des Fußelementes miteinander verbunden, wobei im Bereich außerhalb der Anker zwischen Mantel und Membranträger ein Strömungsraum innerhalb des Fußelementes entsteht, der für Flüssigkeit und Gas durchströmbar ist. Auch eine derartige Ausgestaltung des Fußelementes gehört explizit zum Umfang der Erfindung.

Zum Umfang der Erfindung zählt ebenfalls ein Membranfilter, bei dem in jeder der Membraneinheiten das Gehäuse eines untersten Membranelementes oben an das Geysir-Element anschließt und zudem das Geysir-Element einen Strömungskanal aufweist zum Einlassen der Flüssigkeit in das unterste Membranelement. Dies hat den Vorteil, dass das oben aus dem Geysir-Element austretende Gas nicht seitlich entweichen kann, bevor es in das unterste Membranelement einstritt, sondern gezwungen wird, dieses vertikal nach oben zu durchströmen. Damit wird sichergestellt, dass der komplette aus dem Geysir-Element ausströmende Gasstrom zu Spülzwecken der Membranen im untersten Membranelement genutzt wird.

Um dies zu gewährleisten muss das Gehäuse nicht notwendigerweise dicht an das Geysir-Element anschließen. Es sollten nur keine konstruktionsbedingten Lücken zwischen Geysir und Gehäuse vorhanden sein. Kleine Undichtigkeiten oder konstruktions-bedingte Spalte zur Montage der Membraneinheiten sind tolerabel, sofern sie keine nennenswerte Austrittsmöglichkeit für den Gas- und Flüssigkeitsvolumenstrom bieten.

Ein direkter und lückenloser Anschluss des unteren Membranelementes oben an das Geysir-Element hat darüber hinaus den Vorteil, dass der aus dem Geysir-Element oben austretende Gas-Puls in einen quasi geschlossenen Raum innerhalb des Membranelementes austritt. Dieser Vorteil ist entscheidend, denn wenn der Gas-Puls in diesen quasi geschlossenen Raum des Membranelementes eintritt, so verdrängt er dabei zunächst die dort vorhandene Flüssigkeit. Der weitgehende seitliche Verschluss dieses Raumes führt dazu, dass die Flüssigkeit nur vertikal nach oben, d.h. durch das Membranelement entlang der Hohlfasermembranen verdrängt werden kann. Dies führt zu einer sehr heftigen und sich stark beschleunigenden Wasserströmung durch das Membranelement noch bevor die ersten Gasblasen die Hohlfasermembranen erreichen. D.h. der im Membranelement austretende Gas-Puls erzeugt dort zunächst einen vertikal nach oben gerichteten Flüssigkeits-Puls, der den Spüleffekt der Membranen signifikant verbessert und zu einer weiteren Energieeinsparung führt. Dieser Effekt wird im Hintergrund der Erfindung in einer zum Zeitpunkt dieser Anmeldung noch unveröffentlichten weiteren Anmeldung der Erfinder beschrieben.

In einer weiteren Ausgestaltung des erfindungsgemäßen Membranfilters sind in jeder der Membraneinheiten jeweils oberhalb des Geysir-Elements drei oder mehr der Membranelemente übereinander installiert. Dies hat insbesondere Vorteile, wenn preiswertere Hohlfasermembranen mit kleineren Innendurchmessern verwendet werden, da diese im Lumen größere Strömungswiderstände und daher größere Druckverluste aufweisen und daher vorteilhafterweise kürzer gestaltet werden. Um dann beispielsweise die Beckentiefe von vorhandenen biologischen Becken in Kläranlagen bei Membranbioreaktoren (MBR) ausnutzen zu können, kann es sinnvoll sein, mehr als zwei Membranelemente innerhalb einer Membraneinheit oberhalb eines Geysir-Elementes zu installieren.

Zum Umfang der Erfindung zählt zudem, dass in jeder der Membraneinheiten jeweils die Gehäuse von zwei übereinander angeordneten Membranelementen aneinander anschließen. Ähnlich wie bei dem direkten Anschluss des Geysir-Elementes an das Gehäuse des untersten Membranelementes bewirkt auch diese Ausgestaltung, dass das Gas auch beim Übergang von einem Membranelement in das darüber liegende nicht aus der Membraneinheit seitlich entweichen kann und somit im Membranelement gehalten wird. Zudem wird der weiter oben beschriebene zusätzliche Spül-Effekt durch die Beschleunigung der Wassersäule in den Membranelementen dann auch für die oberen Membranelemente ausgenutzt, was zu einer deutlich effizienteren Ausnutzung der Energie des eingetragenen Gases zu Spülzwecken der Membranen beiträgt.

In einer weiteren Ausgestaltung des erfindungsgemäßen Membranfilters weisen in jeder der Membraneinheiten diejenigen Membranelemente, die unterhalb eines anderen Membranelementes installiert sind, jeweils oben am Gehäuse ein Zwischenelement auf, das unten in das jeweilige Gehäuse des darüber installierten Membranelementes eintaucht, zum Höhenausgleich bei Temperaturausdehnung innerhalb der Membraneinheiten. Damit wird eine konstruktionsbedingt auftretende Herausforderung gelöst: während die Gehäuse der Membranfilter häufig aus Kunststoffen gestaltet sind, werden die Gestelle, in denen die Membraneinheiten installiert werden, oft aus Edelstahl gefertigt. Da viele Kunststoffe ein deutlich unterschiedliches Ausdehnungsverhalten mit der Temperatur im Vergleich zu Edelstahl aufweisen, kann die Verwendung unterschiedlicher Materialien im Membranfilter dann zum Problem werden, wenn die Membraneinheiten an mehreren Stellen in vertikaler Richtung gehaltert werden. Durch das Zwischenelement des erfindungsgemäßen Membranfilters, das jeweils unten in das Gehäuse des darüber installierten Membranelementes eintaucht, wird die unterschiedliche Längenausdehnung der verschiedenen Materialien kompensiert, indem die Zwischenelemente mehr oder weniger tief in das darüber liegende Gehäuse eintauchen. Somit bleiben die oben beschriebenen Vorteile des direkt aneinander Anschließens der Membranelemente in vertikaler Richtung erhalten.

Der zwangsläufig beim Eintauchen des Zwischenelementes in das Gehäuse des darüber installierten Membranelementes entstehende Spalt in radialer Richtung zwischen Gehäuse und Zwischenelement sollte dabei möglichst gering gestaltet werden, um das Gas möglichst effektiv innerhalb der Gehäuse zu halten.

**In** einer kommerziellen Ausgestaltung des erfindungsgemäßen Membranfilters sind in der Regel mehrere der Membraneinheiten in einem Modulgestell nebeneinander installiert, wobei die Permeat-Auslässe von auf einer Höhe positionierten Membranelemente jeweils an eine gemeinsame Permeat-Sammelleitung angeschlossen sind. Dadurch können die Membranfilter mit größeren Gesamtmembranflächen ausgestattet werden. Beim Anschluss der auf einer Höhe positionierten Membranelemente jeweils an eine gemeinsame Permeat-Sammelleitung erweisen sich zudem bei einer Fixierung derartiger Sammelleitungen in einem Edelstahlgestell wieder die im letzten Absatz beschriebenen Zwischenelemente als vorteilhaft, um einen unterschiedlichen Längenausgleich bei größeren Temperaturschwankungen zu gewährleisten.

**In** einer weiteren Ausgestaltung des erfindungsgemäßen Membranfilters weist die Auslasseinrichtung der Geysir-Elemente einen Gasheberkanal auf, in den das Gas bei Unterschreiten eines Grenzpegels der Flüssigkeit in dem Gas-Sammelraum zunächst nach unten aus dem Gas-Sammelraum ausströmt und auf Höhe des Grenzpegels nach oben umgelenkt wird. Dieses Umlenken erfolgt in einem Umlenkungsbereich, der sich unten an den Gasheberkanal anschließt und in dem das Gas von einer Abwärtsströmung in eine Aufwärtsströmung umgelenkt wird. An den Umlenkungsbereich schließt sich dann oben ein Ausströmkanal an, durch den das Gas nach oben aus dem Geysir-Element ausströmt.

Zum Umfang der Erfindung zählt darüber hinaus, dass jede der Auslasseinrichtungen einen Kompensationseinlass aufweist mit einem Kompensationskanal, der sich an den Kompensationseinlass anschließt und in den Umlenkungsbereich mündet, zum Einlassen von Flüssigkeit in den Umlenkungsbereich. Ein derartiger Kompensationseinlass hat den Vorteil, dass die Gas-Ausströmung aus dem Geysir-Element nach weitgehender Entleerung des Gas-Sammelraums auch bei höheren Gas-Zufuhr-Volumenströmen sicher zum Erliegen kommt, und somit der Befüllvorgang erneut starten kann. Dadurch wird das Pulsen des Geysir-Elementes auch bei höheren Gas-Volumenströmen sichergestellt.

Ein derartiger Geysir mit Kompensationseinlass wird in DE 10 2019 129 074 B3 beschrieben. Dabei liegt der Kompensationseinlass im Gas-Sammelraum. Dies hat zur Folge, dass im Zustand des mit Gas gefüllten Gas-Sammelraums der Kompensationseinlass im Gas-Bereich liegt und daher ein sicheres Starten des Geysirs gewährleistet, während im Zustand des vom Gas entleerten, d.h. mit Flüssigkeit gefüllten Gas-Sammelraums der Kompensationseinlass im Flüssigkeits-Bereich liegt und daher ein zuverlässiges Stoppen des Gas-Pulses gewährleistet. Auch eine derartige Gestaltung des Geysir-Elementes gehört explizit zum Umfang der Erfindung.

Ausgehend von dem bekannten Verfahren wird nach der Erfindung vorgeschlagen, dass das Gas in Membraneinheiten, in denen jeweils übereinander angeordnet eines der Geysir-Elemente und darüber mehrere der Membranelemente installiert sind, nach Durchströmen des unteren Membranelementes nacheinander jeweils in das darüber installierte Membranelement eintritt und dieses durchströmt. Dadurch wird das aus dem Geysir austretende Gas effektiver zur Spülung der Membranen ausgenutzt.

### Ausführungsbeispiele

Die Erfindung wird nachfolgend anhand von Ausführungsbeispielen erläutert. Es zeigen
- Fig. 1a bis 1c: Schnitte eines ersten erfindungsgemäßen Membranfilters
- Fig. 2a bis 2c: Schnitte und Detail-Ansicht eines zweiten erfindungsgemäßen Membranfilters
- Fig. 3a bis 3e: Schnitte und Detail-Ansicht eines dritten erfindungsgemäßen Membranfilters
- Fig.4: Schnitt eines vierten erfindungsgemäßen Membranfilters
- Fig. 5a bis 5c: Schnitte und Ansicht eines fünften erfindungsgemäßen Membranfilters
- Fig. 6: Schnitt durch einen erfindungsgemäßen Membranfilter im Betrieb nach einem erfindungsgemäßen Verfahren

Die in den Figuren dargestellten Zeichnungen sind nicht maßstäblich. Alle nicht angegebenen Details der im Folgenden beschriebenen erfindungsgemäßen Membranfilter oder Verfahren sind identisch mit den Ausführungen bereits zuvor beschriebener erfindungsgemäßer Membranfilter, bzw. Verfahren.

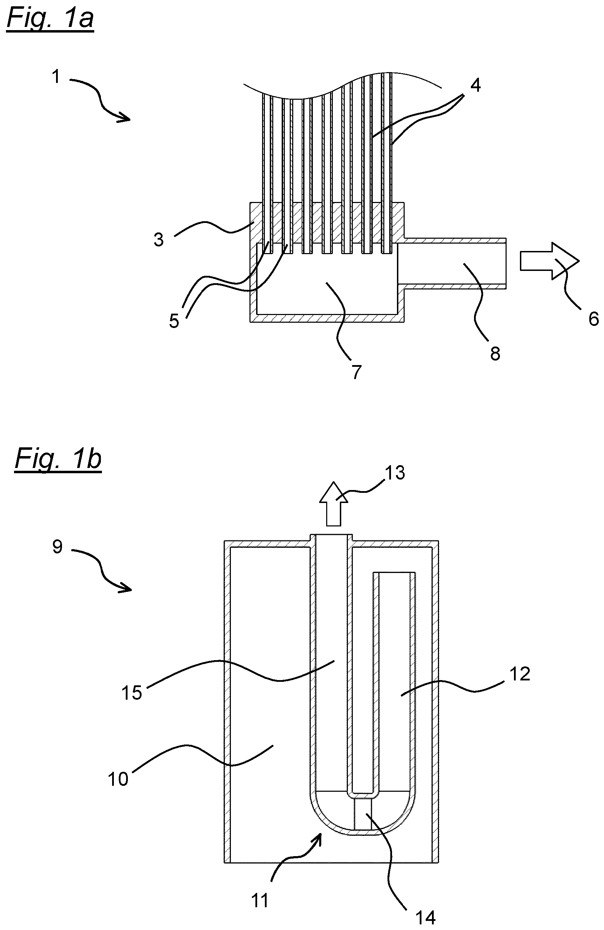

Die Figur 1a zeigt einen Teilschnitt durch den unteren Teil eines Membranelementes 1 eines erfindungsgemäßen Membranfilters 2 für den Einsatz im getauchten Betrieb zum Filtern einer Flüssigkeit. Zu sehen ist ein Fußelement 3, in dem Hohlfasermembranen 4 befestigt sind mit einem Lumen 5 in das ein flüssiges Permeat 6 filtrierbar ist. Der obere Teil der Hohlfasermembranen 4 ist nicht gezeigt. **In** dem Fußelement 3 befindet sich ein Permeatsammelraum 7, der mit den Lumen 5 der Hohlfasermembranen 4 verbunden ist zum Sammeln des Permeats 6 aus den Hohlfasermembranen 4. Zudem weist das Membranelement 1 einen Permeat-Auslass 8 auf zum Ablassen des Permeats 6 aus dem Permeatsammelraum 7.

Die Figur 1b zeigt einen Schnitt durch ein Geysir-Element 9 des erfindungsgemäßen Membranfilters 2 mit einem nach unten offenen Gas-Sammelraum 10 und einer Auslasseinrichtung 11, die einen Gasheberkanal 12 zum Ausströmen eines Gases 13 aus dem Gas-Sammelraum 10 nach unten und einen Umlenkungsbereich 14 unten an dem Gasheberkanal 12 zum Umlenken des ausströmenden Gases 13 nach oben aufweist. An dem Umlenkungsbereich 14 schließt oben ein Ausströmkanal 15 an zum Auslassen des Gases 13 nach oben aus dem Geysir-Element 9.

Bei Unterschreiten eines nicht dargestellten Grenzpegels der Flüssigkeit in dem Gas-Sammelraum 10 strömt das Gas zunächst nach unten aus dem Gas-Sammelraum aus und wird auf Höhe des Grenzpegels nach oben umgelenkt und strömt anschließend durch den Ausströmkanal 15 aus dem Geysir-Element 9. Dabei liegt der Grenzpegel im Bereich des Umlenkungsbereiches 14.

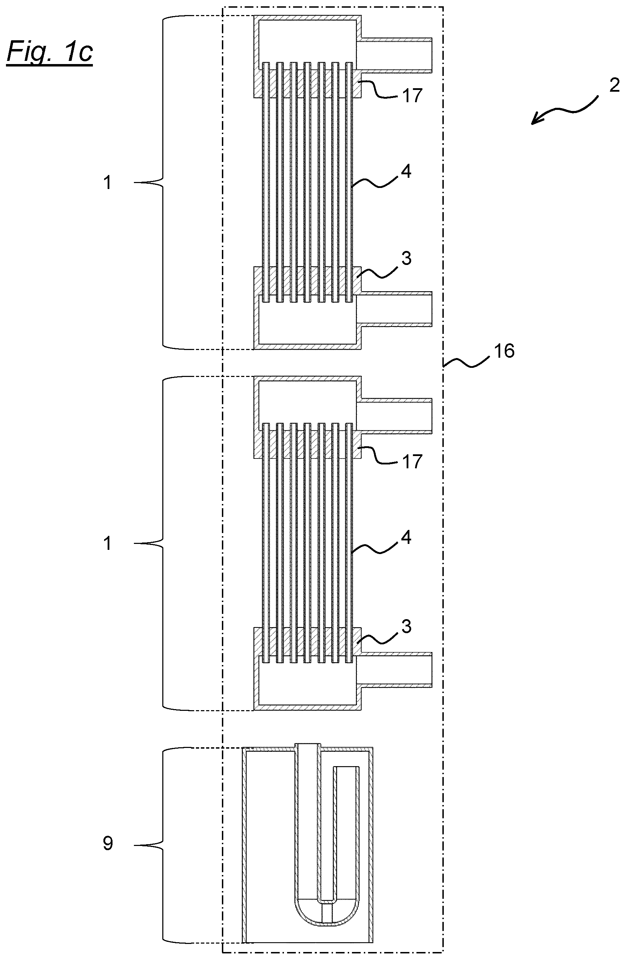

Figur 1c zeigt einen Schnitt durch eine Membraneinheit 16 des erfindungsgemäßen Membranfilters 2. **In** dieser Membraneinheit 16 sind eines der Geysir-Elemente 9 und darüber zwei der Membranelemente 1 übereinander installiert. Jedes der Membranelemente 1 hat ein Fußelement 3 und ein Kopfelement 17, in denen die Hohlfasermembranen 4 unten und oben befestigt sind ("Double-Header-Membranelemente"). Das untere der beiden Membranelemente 1 ist in vertikaler Richtung sowohl vom darunter installierten Geysir-Element 9 als auch von dem darüber installierten Membranelement 1 beabstandet.

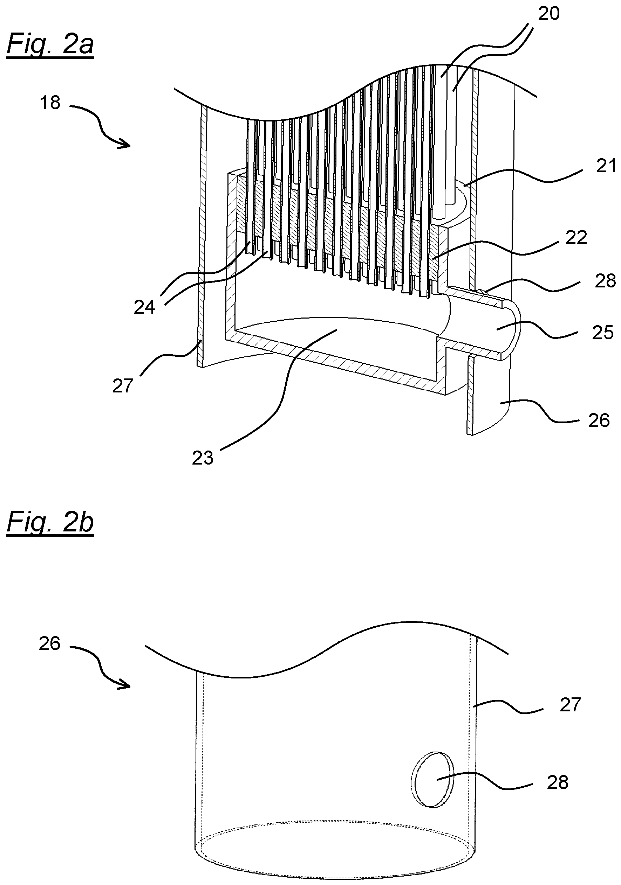

Figur 2a zeigt einen Detailschnitt durch ein Membranelement 18 eines zweiten erfindungsgemäßen Membranfilters 19 mit Hohlfasermembranen 20, die in einem Fußelement 21 befestigt sind. Die Befestigung erfolgt mit Hilfe einer Harzschicht 22, in die die Hohlfasermembranen 20 eingebettet und im Fußelement 21 vergossen sind. Das Fußelement 21 weist einen Permeatsammelraum 23 auf, der mit den Lumen 24 der Hohlfasermembranen 20 verbunden ist, und einen Permeat-Auslass 25. Darüber hinaus weist das Membranelement 18 ein rohrförmiges Gehäuse 26 auf, das die Hohlfasermembranen 20 des Membranelementes 18 umgibt und dessen seitliche Wandung 27 von dem Permeat-Auslass 25 durchdrungen wird. **In** diesem Fall durchdringt der Permeat-Auslass 25 das Gehäuse 26 seitlich durch eine Öffnung 28 im Gehäuse 26.

Figur 2b zeigt das rohrförmige Gehäuse 26 des Membranelementes 18 des zweiten erfindungsgemäßen Membranfilters 19. Dieses Gehäuse 26 umgibt die Hohlfasermembranen 20 sowie auch das Fußelement 21 des Membranelementes 18. Dargestellt ist auch die seitliche Öffnung 28 im Gehäuse 26, durch die der Permeat-Auslass 25 geführt wird.

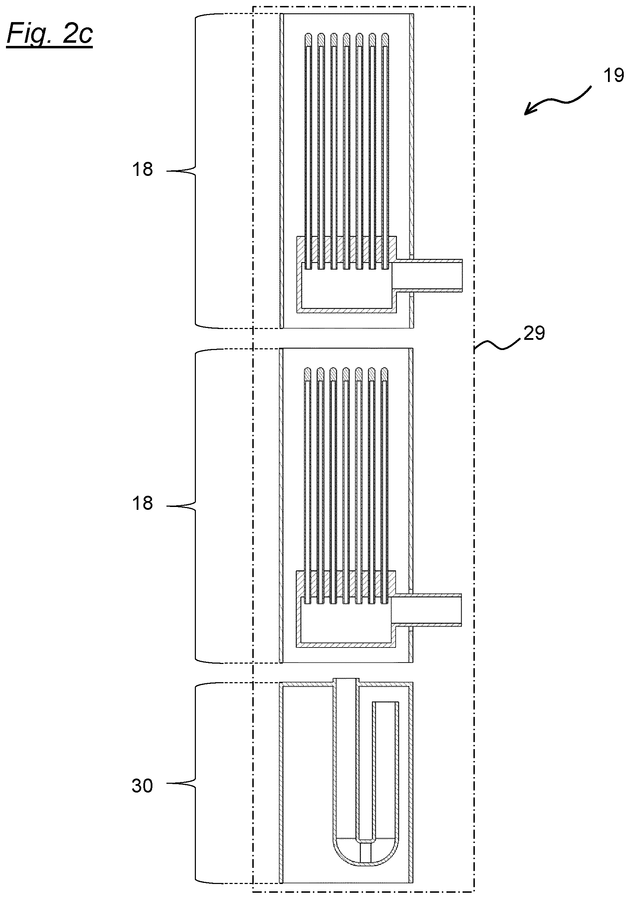

Figur 2c zeigt einen Schnitt durch eine Membraneinheit 29 des erfindungsgemäßen Membranfilters 19. **In** der Membraneinheit 29 sind ein Geysir-Element 30 und darüber zwei der Membranelemente 18 übereinander installiert. Die Hohlfasermembranen 20 in den Membranelementen 18 sind oben einzeln verschlossen, um in der zu filtrierenden Flüssigkeit frei schweben zu können. Dies hat den Vorteil, dass Haare und faserige Verbindungen, die sich in der Flüssigkeit befinden, beim Betrieb des Membranfilters 19 frei nach oben abgestreift werden können und sich somit nicht im Membranfilter 19 zwischen den Hohlfasermembranen 20 festsetzen.

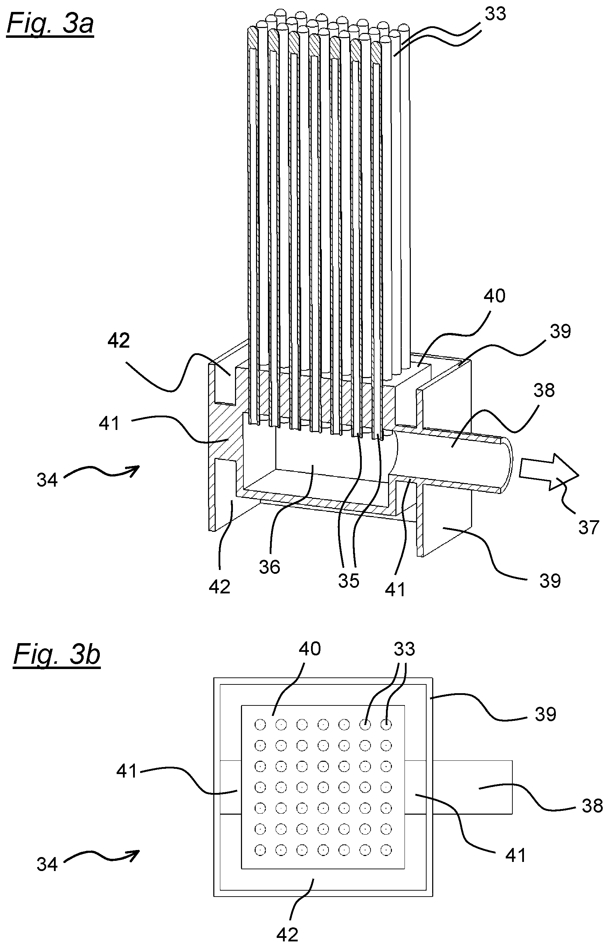

Figur 3a zeigt einen Schnitt durch einen Teil eines Membranelementes 31 eines dritten erfindungsgemäßen Membranfilters 32 mit Hohlfasermembranen 33, die oben einzeln verschlossen und frei beweglich sind und unten in einem Fußelement 34 befestigt sind, in dem sie mit ihren Lumen 35 an einen Permeatsammelraum 36 anschließen zum Sammeln eines Permeats 37 aus den Hohlfasermembranen 33. Das Permeat 37 kann dann über einen Permeat-Auslass 38 aus dem Membranelement 31 ausgelassen werden. Das Fußelement 34 weist jeweils einen rohrförmigen Mantel 39 mit rechteckigem Querschnitt und einen Membranträger 40 auf, in dem die Hohlfasermembranen 33 befestigt sind.

Mantel 39 und Membranträger 40 sind durch Anker 41 des Fußelementes 34 miteinander verbunden, wobei der Permeat-Auslass 38 in der Verlängerung eines der Anker 41, bzw. durch diesen verläuft. Zwischen Mantel 39 und Membranträger 40 entsteht ein Ringspalt 42, der von Flüssigkeit und Gas durchströmbar ist und der nur durch die Anker 41 unterbrochen wird.

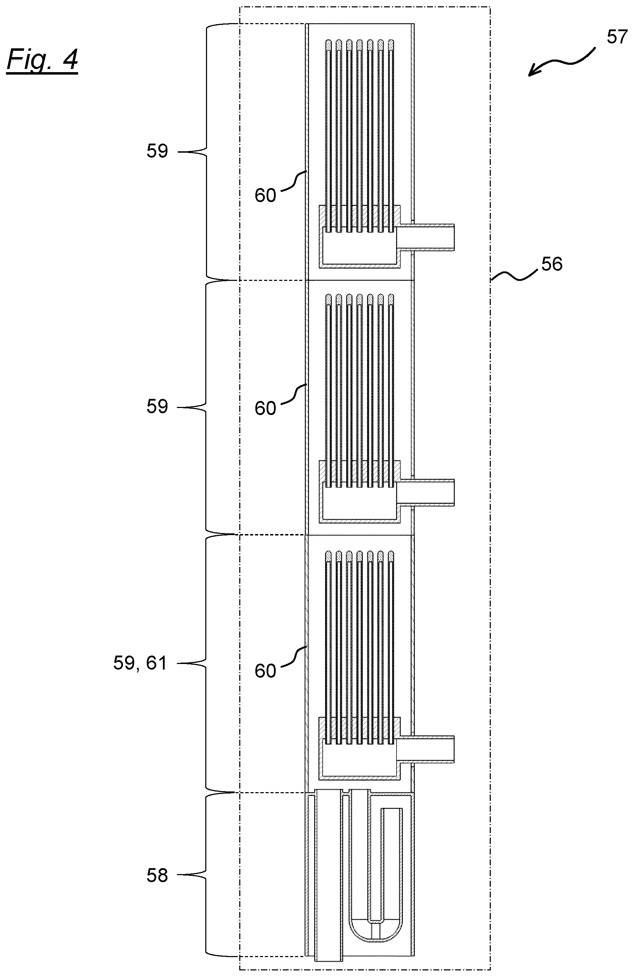

Figur 3b zeigt eine Draufsicht auf den Teil des Membranelementes 31 aus Figur 4a. Dabei sind der Membranträger 40, der Mantel 39 sowie die Anker 41 zu sehen, die alle Teil des Fußelementes 34 sind. Ebenfalls erkennbar sind der Ringspalt 42 zwischen Mantel 39 und Membranträger 40, der nur durch die Anker 41 unterbrochen wird, wobei einer der Anker in Verlängerung des Permeat-Auslasses 38 verläuft.

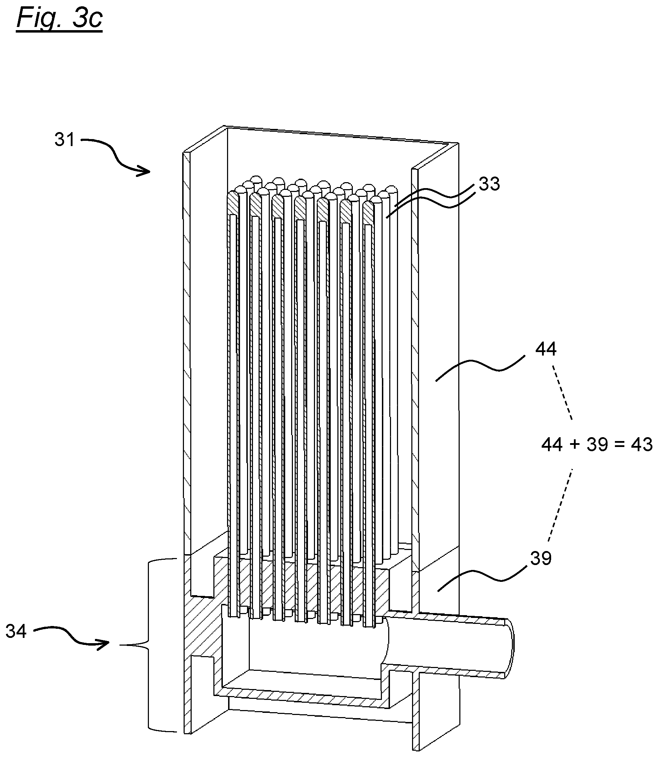

Figur 3c zeigt einen Schnitt durch das vollständige Membranelement 31. Dieses weist ein Gehäuse 43 auf, das aus dem Mantel 39 des Fußelementes 34 und einem rechteckigen Rohr 44 besteht, das sich oben an den Mantel 39 anschließt. Das Gehäuse 43 umschließt die Hohlfasermembranen 33 des Membranelementes 31.

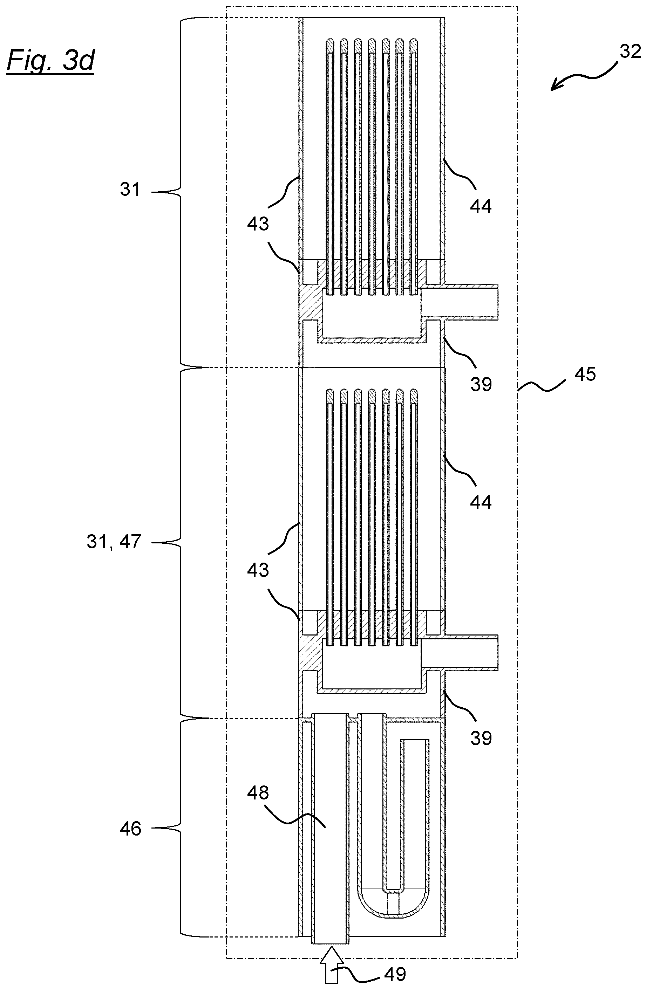

Figur 3d zeigt einen Schnitt durch eine Membraneinheit 45 des Membranfilters 32. **In** dieser sind oberhalb eines Geysir-Elementes 46 zwei Membranelemente 31 übereinander installiert, wobei das Gehäuse 43 eines untersten Membranelementes 47 oben an das Geysir-Element 46 anschließt. Zudem weist das Geysir-Element 46 einen Strömungskanal 48 auf zum Einlassen von Flüssigkeit 49 in das unterste Membranelement 47. Der Strömungskanal 48 durchdringt das Geysir-Element 46 in vertikaler Richtung. Zudem schließen in der Membraneinheit 45 die Gehäuse 43 der zwei übereinander angeordneten Membranelemente 31 aneinander an.

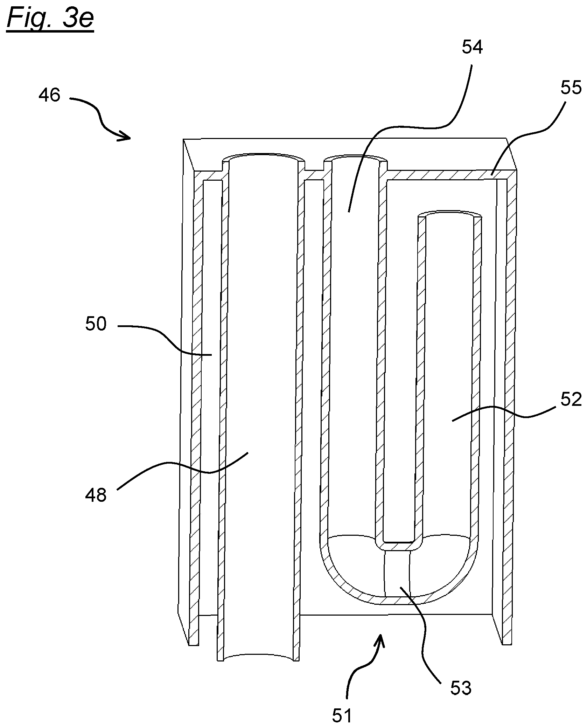

Figur 3e zeigt einen Schnitt durch das Geysir-Element 46. Dieses weist neben dem Strömungskanal 48 einen nach unten offenen Gas-Sammelraum 50 sowie eine Auslasseinrichtung 51 auf. Die Auslasseinrichtung 51 besteht aus einem Gasheberkanal 52 im Gas-Sammelraum 50, einen Umlenkungsbereich 53 unten an dem Gasheberkanal 52 sowie einen Ausströmkanal 54, der sich oben an den Umlenkungsbereich 53 anschließt und oberhalb des Gas-Sammelraumes 50 offen endet. Der Strömungskanal 48 verläuft parallel zum Ausströmkanal 54, wobei er unterhalb des Gas-Sammelraums 50 beginnt und oberhalb des Gas-Sammelraums 50 endet. Dabei wird der Gas-Sammelraum 50 nach oben durch eine obere Wandung 55 des Geysir-Elementes 46 begrenzt und nach unten durch den Umlenkungsbereich 53, da dieser den maximalen Füllgrad des Geysir-Elementes 46 mit Gas begrenzt.

Figur 4 zeigt einen Schnitt durch eine Membraneinheit 56 eines vierten erfindungsgemäßen Membranfilters 57, in dem ein Geysir-Element 58 und darüber drei Membranelemente 59 übereinander installiert sind. Diese sind baugleich zu den Membranelementen 16 des zweiten Membranfilters 17. Dabei schließen in der Membraneinheit 56 jeweils die Gehäuse 60 von zwei übereinander angeordneten Membranelementen 59 aneinander an. Zudem schließt das Gehäuse 60 des untersten Membranelementes 61 an das Geysir-Element 58 an.

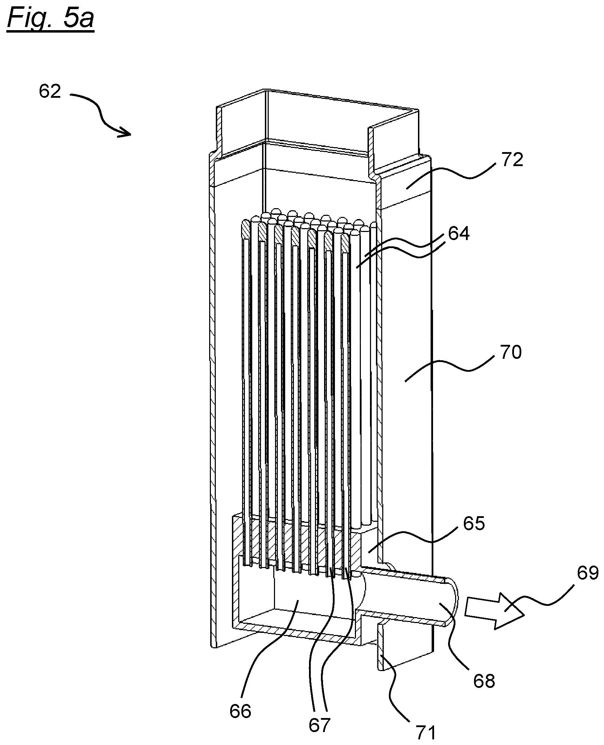

Figur 5a zeigt einen Schnitt durch ein Membranelement 62 eines fünften erfindungsgemäßen Membranfilters 63 mit Hohlfasermembranen 64, die in einem Fußelement 65 befestigt sind. **In** dem Fußelement 65 befindet sich ein Permeatsammelraum 66, der mit Lumen 67 der Hohlfasermembranen 64 verbunden ist. Das Fußelement 65 weist darüber hinaus einen Permeat-Auslass 68 auf zum Ablassen eines Permeats 69 aus dem Permeatsammelraum 66. Zudem weist das Membranelement 62 ein Gehäuse 70 auf, das die Hohlfasermembranen 64 umgibt, wobei eine seitliche Wandung 71 des Gehäuses 70 vom Permeat-Auslass 68 durchdrungen wird. Das Membranelement 62 weist darüber hinaus oben am Gehäuse 70 ein Zwischenelement 72 auf, das derart gestaltet ist, dass es oben an das Gehäuse 70 anschließt und von unten in das Gehäuse 70 eines darüber installierten Membranelementes 62 eintauchen kann.

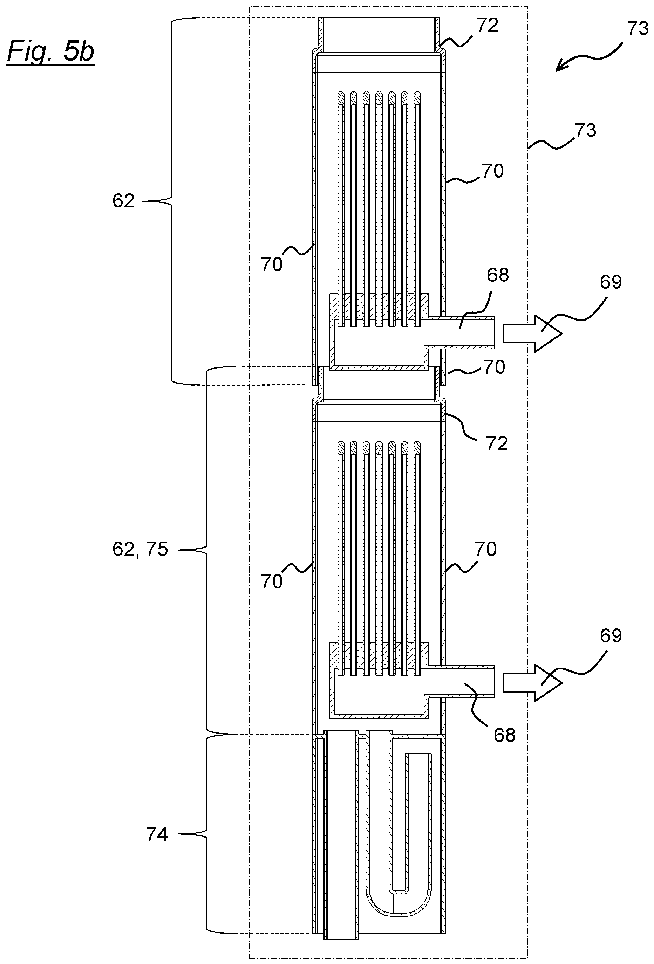

Figur 5b zeigt einen Schnitt durch eine Membraneinheit 73 des Membranfilters 63 mit einem Geysir-Element 74 und darüber zwei Membranelementen 62 übereinander angeordnet, wobei das Zwischenelement 72 des unteren Membranelementes 62 unten in das Gehäuse 70 des darüber installierten Membranelementes 62 eintaucht. Somit schließen die Gehäuse 70 der zwei übereinander angeordneten Membranelemente 62 aneinander an. Zudem schließt das Gehäuse 70 des untersten Membranelementes 75 oben an das Geysir-Element 74 an.

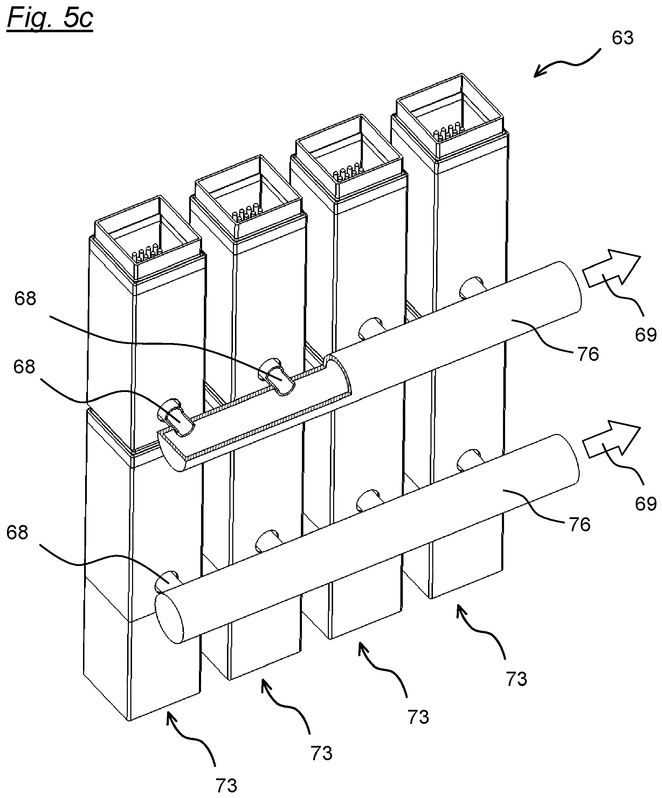

Figur 5c zeigt den Membranfilter 63 mit vier parallel nebeneinander angeordneten Membraneinheiten 73. Die Permeat-Auslässe 68 der auf einer Höhe positionierten Membranelemente 62 sind - wie in einem Detail-Schnitt innerhalb der Figur 5c dargestellt - jeweils an eine gemeinsame Permeat-Sammelleitung 76 angeschlossen, in der das entstehende Permeat 69 abgeführt werden kann.

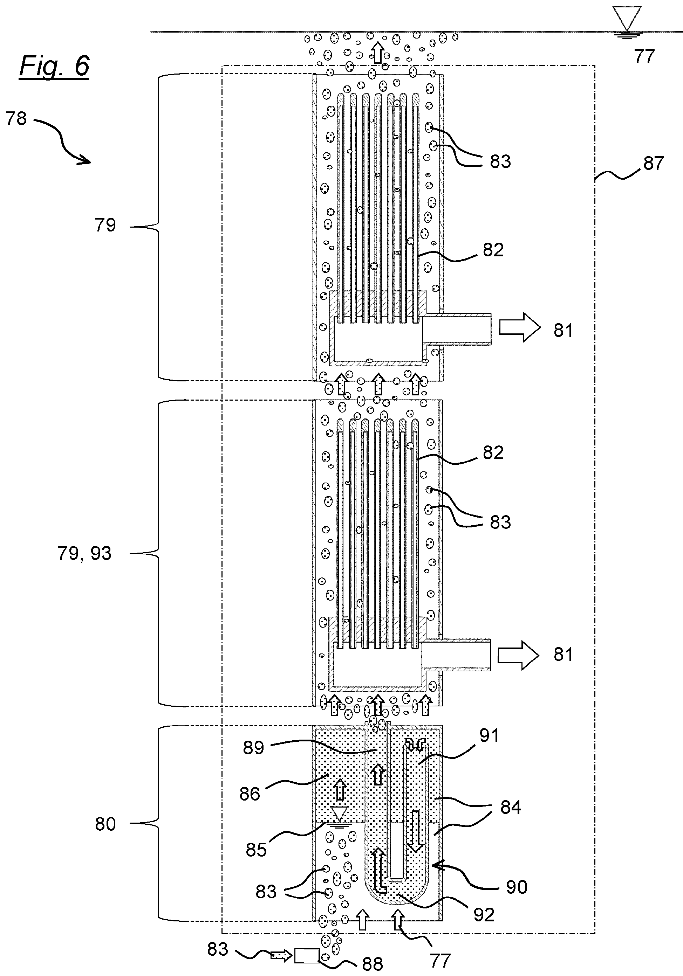

Figur 6 zeigt ein erstes erfindungsgemäßes Verfahren zum Filtern einer Flüssigkeit 77 in einem in die Flüssigkeit eingetauchten Membranfilter 78 mit Membranelementen 79 und einem Geysir-Element 80, wobei in jedem der Membranelemente 79 ein flüssiges Permeat 81 aus der Flüssigkeit 77 durch Hohlfasermembranen 82 filtriert wird und die Hohlfasermembranen 82 durch ein Gas 83 gespült werden, und wobei in das Geysir-Element 80 das Gas 83 kontinuierlich eingelassen wird und pulsweise wieder aus dem Geysir-Element 80 ausströmt, indem es zyklisch ein in einem Gas-Sammelraum 84 des Geysir-Elementes 80 befindliches, nach unten durch einen Pegel 85 der Flüssigkeit 77 begrenztes Gasvolumen 86 auffüllt und dabei die Flüssigkeit 77 von oben nach unten aus dem Gas-Sammelraum 84 verdrängt, dann aus dem Gas-Sammelraum 84 nach oben aus dem Geysir-Element 80 ausströmt, während die Flüssigkeit 77 von unten in den Gas-Sammelraum 84 nachströmt bis das Ausströmen des Gases 83 stoppt, wobei das pulsweise ausströmende Gas 83 von unten in eines der Membranelemente 79 einströmt und wobei das Gas 83 pulsweise eine Membraneinheit 87 durchströmt, in der ein Geysir-Element 80 und darüber zwei der Membranelemente 79 übereinander angeordnet sind.

Das Gas wird bei diesem Verfahren kontinuierlich über einen Gas-Einlass 88 in das Geysir-Element 80 eingelassen. Dabei befüllt sich der Gas-Sammelraum 84 mit Gas 83 und der Pegel 85 sinkt nach unten. Sobald dieser einen nicht dargestellten Grenzpegel kurz unterhalb eines Ausströmkanals 89 einer Auslasseinheit 90 unterschreitet, strömt das Gas 83 in einen Gasheberkanal 91 der Auslasseinrichtung 90 nach unten aus dem Gas-Sammelraum 84 aus, wird dann in einem unten an dem Gasheberkanal 91 befindlichen Umlenkungsbereich 92 der Auslasseinheit 90 auf Höhe des Grenzpegels umgelenkt und strömt dann durch den sich oben an den Umlenkungsbereich 92 anschließenden Ausströmkanal 89 nach oben aus dem Geysir-Element 80 aus. Dabei strömt die Flüssigkeit 77 von unten in den Gas-Sammelraum 84 nach bis das Ausströmen des Gases 83 stoppt und der Befüllvorgang des Gas-Sammelraumes 84 mit dem Gas 83 erneut beginnt. Das pulsweise aus dem Geysir-Element 80 ausströmende Gas 83 strömt von unten in das unterste Membranelement 93 ein, durchströmt dieses und strömt danach von unten in das darüber installierte Membranelement 79 ein und durchströmt auch dieses.

Die Ableitung des filtrierten Permeats 81 aus den Membranelementen 79 erfolgt über nicht dargestellte Rohrleitungssysteme.

**In** den Figuren sind
- 1: Membranelement
- 2: Membranfilter
- 3: Fußelement
- 4: Hohlfasermembran
- 5: Lumen
- 6: Permeat
- 7: Permeatsammelraum
- 8: Permeat-Auslass
- 9: Geysir-Element
- 10: Gas-Sammelraum
- 11: Auslasseinrichtung
- 12: Gasheberkanal
- 13: Gas
- 14: Umlenkungsbereich
- 15: Ausströmkanal
- 16: Membraneinheit
- 17: Kopfelement
- 18: Membranelement
- 19: Membranfilter
- 20: Hohlfasermembranen
- 21: Fußelement
- 22: Harzschicht
- 23: Permeatsammelraum
- 24: Lumen
- 25: Permeat-Auslass
- 26: Gehäuse
- 27: seitliche Wandung
- 28: Öffnung
- 29: Membraneinheit
- 30: Geysir-Element
- 31: Membranelement
- 32: Membranfilter
- 33: Hohlfasermembran
- 34: Fußelement
- 35: Lumen
- 36: Permeatsammelraum
- 37: Permeat
- 38: Permeat-Auslass
- 39: Mantel
- 40: Membranträger
- 41: Anker
- 42: Ringspalt
- 43: Gehäuse
- 44: Rohr
- 45: Membraneinheit
- 46: Geysir-Element
- 47: unterstes Membranelement
- 48: Strömungskanal
- 49: Flüssigkeit
- 50: Gas-Sammelraum
- 51: Auslasseinrichtung
- 52: Gasheberkanal
- 53: Umlenkungsbereich
- 54: Ausströmkanal
- 55: obere Wandung
- 56: Membraneinheit
- 57: Membranfilter
- 58: Geysir-Element
- 59: Membranelement
- 60: Gehäuse
- 61: unterstes Membranelement
- 62: Membranelement
- 63: Membranfilter
- 64: Hohlfasermembran
- 65: Fußelement
- 66: Permeatsammelraum
- 67: Lumen
- 68: Permeat-Auslass
- 69: Permeat
- 70: Gehäuse
- 71: seitliche Wandung
- 72: Zwischenelement
- 73: Membraneinheit
- 74: Geysir-Element
- 75: unterstes Membranelement
- 76: Permeat-Sammelleitung
- 77: Flüssigkeit
- 78: Membranfilter
- 79: Membranelement
- 80: Geysir-Element
- 81: Permeat
- 82: Hohlfasermembran
- 83: Gas
- 84: Gas-Sammelraum
- 85: Pegel
- 86: Gasvolumen
- 87: Membraneinheit
- 88: Gaseinlass
- 89: Ausströmkanal
- 90: Auslasseinrichtung
- 91: Gasheberkanal
- 92: Umlenkungsbereich
- 93: unterstes Membranelement

## Patentansprüche

1. Membranfilter (2, 19, 32, 57, 63, 78) für den Einsatz im getauchten Betrieb zum Filtern einer Flüssigkeit (49, 77) mit Membranelementen (1, 18, 31, 59, 62, 79) und Geysir-Elementen (9, 30, 46) zur pulsweisen Spülung der Membranelemente (1, 18, 31, 59, 62, 79) mit einem Gas (13, 83), wobei jedes der Membranelemente (1, 18, 31, 59, 62, 79) folgende Merkmale aufweist:
• in einem Fußelement (3, 21, 34, 65) befestigte Hohlfasermembranen (4, 20, 33, 64, 82) mit jeweils einem Lumen (5, 24, 35, 67), in das ein flüssiges Permeat (6, 37, 69, 81) aus der Flüssigkeit (49, 77) filtrierbar ist,
• einen Permeatsammelraum (7, 23, 36, 66), der mit den Lumen (5, 24, 35, 67) der Hohlfasermembranen (4, 20, 33, 64, 82) verbunden ist zum Sammeln des Permeats (6, 37, 69, 81) aus den Hohlfasermembranen (4, 20, 33, 64, 82),
• einen Permeat-Auslass (8, 25, 38, 68) zum Ablassen des Permeats (6, 37, 69, 81) aus dem Permeatsammelraum (7, 23, 36, 66) und
• ein rohrförmiges Gehäuse (26, 43, 60, 70), das die Hohlfasermembranen (4, 20, 33, 64, 82) des Membranelementes (1, 18, 31, 59, 62, 79) umgibt und das von dem Permeat-Auslass (8, 25, 38, 68) durchdrungen wird,
und wobei die Geysir-Elemente (9, 30, 46) unterhalb der Membranelemente (1, 18, 31, 59, 62, 79) installiert sind und jedes der Geysir-Elemente (9, 30, 46) folgende Merkmale aufweist:
• einen nach unten offenen Gas-Sammelraum (10, 50, 84),
• eine Auslasseinrichtung (11, 51, 90) zum pulsweisen Auslassen des Gases (13, 83) nach oben aus dem Gas-Sammelraum (10, 50, 84), ***gekennzeichnet durch*** Membraneinheiten (16, 29, 45, 56, 73, 87), in denen jeweils eines der Geysir-Elemente (9, 30, 46) und darüber mehrere der Membranelemente (1, 18, 31, 59, 62, 79) übereinander angeordnet sind.

2. Membranfilter (2, 19, 32, 57, 63, 78) nach dem vorgenannten Anspruch, ***dadurch gekennzeichnet, dass*** die Hohlfasermembranen (4, 20, 33, 64, 82) oben einzeln verschlossen sind und frei in der Flüssigkeit (49, 77) schweben.

3. Membranfilter (2, 19, 32, 57, 63, 78) nach einem der vorgenannten Ansprüche, ***dadurch gekennzeichnet, dass*** das Fußelement (3, 21, 34, 65) einen rohrförmigen Mantel (39) aufweist und das Gehäuse (26, 43, 60, 70) aus dem Mantel (39) und einem Rohr (44) besteht, das oben an den Mantel (39) anschließt.

4. Membranfilter (2, 19, 32, 57, 63, 78) nach einem der vorgenannten Ansprüche, ***dadurch gekennzeichnet, dass*** in jeder der Membraneinheiten (16, 29, 45, 56, 73, 87) das Gehäuse (26, 43, 60, 70) eines untersten Membranelementes (47, 61, 75, 93) oben an das Geysir-Element (9, 30, 46) anschließt und dass das Geysir-Element (9, 30, 46) einen Strömungskanal (48) aufweist zum Einlassen der Flüssigkeit (49, 77) in das unterste Membranelement (47, 61, 75, 93).

5. Membranfilter (2, 19, 32, 57, 63, 78) nach einem der vorgenannten Ansprüche, ***dadurch gekennzeichnet, dass*** in jeder der Membraneinheiten (16, 29, 45, 56, 73, 87) jeweils die Gehäuse (26, 43, 60, 70) von zwei übereinander angeordneten Membranelementen (1, 18, 31, 59, 62, 79) aneinander anschließen.

6. Membranfilter (2, 19, 32, 57, 63, 78) nach einem der vorgenannten Ansprüche, ***dadurch gekennzeichnet, dass*** in jeder der Membraneinheiten (16, 29, 45, 56, 73, 87), diejenigen Membranelemente (1, 18, 31, 59, 62, 79), die unterhalb eines anderen Membranelementes (1, 18, 31, 59, 62, 79) installiert sind, jeweils oben am Gehäuse (26, 43, 60, 70) ein Zwischenelement (72) aufweisen, das unten in das jeweilige Gehäuse (26, 43, 60, 70) des darüber installierten Membranelementes (1, 18, 31, 59, 62, 79) eintaucht, zum Höhenausgleich bei Temperaturausdehnung innerhalb der Membraneinheiten (16, 29, 45, 56, 73, 87).

7. Membranfilter (2, 19, 32, 57, 63, 78) nach einem der vorgenannten Ansprüche ***dadurch gekennzeichnet, dass*** mehrere der Membraneinheiten (16, 29, 45, 56, 73, 87) in einem Modulgestell nebeneinander installiert sind, wobei die Permeat-Auslässe von auf einer Höhe positionierten Membranelementen (1, 18, 31, 59, 62, 79) jeweils an eine gemeinsame Permeat-Sammelleitung (76) angeschlossen sind.

8. Membranfilter (2, 19, 32, 57, 63, 78) nach einem der vorgenannten Ansprüche, ***dadurch gekennzeichnet, dass*** die Auslasseinrichtung (11, 51, 90) einen Gasheberkanal (12, 52, 91) aufweist, in den das Gas (13, 83) bei Unterschreiten eines Grenzpegels der Flüssigkeit (49, 77) in dem Gas-Sammelraum (10, 50, 84) zunächst nach unten aus dem Gas-Sammelraum (10, 50, 84) ausströmt und auf Höhe des Grenzpegels nach oben umgelenkt wird.

9. Verfahren zum Filtern einer Flüssigkeit (49, 77) in einem in die Flüssigkeit (49, 77) eingetauchten Membranfilter (2, 19, 32, 57, 63, 78) mit Membranelementen (1, 18, 31, 59, 62, 79) und Geysir-Elementen (9, 30, 46), wobei in jedem der Membranelemente (1, 18, 31, 59, 62, 79)
• ein flüssiges Permeat (6, 37, 69, 81) aus der Flüssigkeit (49, 77) in ein Lumen (5, 24, 35, 67) von Hohlfasermembranen (4, 20, 33, 64, 82) filtriert wird, die in einem Fußelement (3, 21, 34, 65) befestigt sind,
• das Permeat (6, 37, 69, 81) aus den Lumen (5, 24, 35, 67) in einem Permeatsammelraum (7, 23, 36, 66) gesammelt wird,
• ein rohrförmiges Gehäuse (26, 43, 60, 70) die Hohlfasermembranen (4, 20, 33, 64, 82) des Membranelementes (1, 18, 31, 59, 62, 79) umgibt,
• das Permeat (6, 37, 69, 81) durch das Gehäuse (26, 43, 60, 70) aus dem Permeatsammelraum (7, 23, 36, 66) abgelassen wird und
• die Hohlfasermembranen (4, 20, 33, 64, 82) durch ein Gas (13, 83) gespült werden,
und wobei in jedes der Geysir-Elemente (9, 30, 46) das Gas (13, 83) kontinuierlich eingelassen wird und pulsweise wieder aus dem Geysir-Element (9, 30, 46) ausströmt, indem es zyklisch
a. ein in einem Gas-Sammelraum (10, 50, 84) des Geysir-Elementes (9, 30, 46) befindliches, nach unten durch einen Pegel (85) der Flüssigkeit (49, 77) begrenztes Gasvolumen auffüllt und dabei die Flüssigkeit (49, 77) von oben nach unten aus dem Gas-Sammelraum (10, 50, 84) verdrängt,
b. dann aus dem Gas-Sammelraum (10, 50, 84) nach oben aus dem Geysir-Element (9, 30, 46) ausströmt,
c. während die Flüssigkeit (49, 77) von unten in den Gas-Sammelraum (10, 50, 84) nachströmt bis das Ausströmen des Gases (13, 83) stoppt,
und wobei das pulsweise ausströmende Gas (13, 83) von unten in eines der Membranelemente (1, 18, 31, 59, 62, 79) einströmt, ***dadurch gekennzeichnet, dass*** das Gas (13, 83) pulsweise Membraneinheiten (16, 29, 45, 56, 73, 87) durchströmt, in denen jeweils eines der Geysir-Elemente (9, 30, 46) und darüber mehrere der Membranelemente (1, 18, 31, 59, 62, 79) übereinander angeordnet sind.

## Claims

1. A membrane filter (2, 19, 32, 57, 63, 78) for use in submersed operation to filter a liquid (49, 77), with
membrane elements (1, 18, 31, 59, 62, 79) and geyser elements (9, 30, 46) for the pulsed flushing of the membrane elements (1, 18, 31, 59, 62, 79) with a gas (13, 83), wherein each of the
membrane elements (1, 18, 31, 59, 62, 79) has the following features:
- hollow-fiber membranes (4, 20, 33, 64, 82) fastened in a foot element (3, 21, 34, 65), each having a lumens (5, 24, 35, 67) in which a liquid permeate (6, 37, 69, 81) can be filtered out of the liquid (49, 77),
- a permeate collection chamber (7, 23, 36, 66), which is connected with the lumens (5, 24, 35, 67) of the hollow-fiber membranes (4, 20,33, 64, 82) for collecting the permeate (6, 37, 69, 81) from the hollow-fiber membranes (4, 20, 33, 64, 82),
- a permeate outlet (8, 25, 38, 68) for draining the permeate (6, 37, 69, 81) from the permeate collection chamber (7, 23, 36, 66), and
- a tubular housing (26, 43, 60, 70), which envelops the hollow-fiber membranes (4, 20, 33, 64, 82) of the membrane element (1, 18, 31, 59, 62, 79) and is penetrated by the permeate outlet (8, 25, 38, 68),
and wherein the geyser elements (9, 30, 46) are installed under the membrane elements (1, 18, 31, 59, 62, 79), and each of the geyser elements (9, 30, 46) have the following features:
- a downwardly open gas collection chamber (10, 50, 84),
- an outlet device (11, 51, 90) for the pulsed, upward draining of the gas (13, 83) from the gas collection chamber (10, 50, 84),
**characterized by** membrane units (16, 29, 45, 56, 73, 87), in which a respective one of the geyser elements (9, 30, 46) is arranged, and above which several of the membrane elements (1, 18, 31, 59, 62, 79) are stacked one on top of the other.

2. The membrane filter (2, 19, 32, 57, 63, 78) according to the preceding claim, **characterized in that** the hollow-fiber membranes (4, 20, 33, 64, 82) are individually closed above and float freely in the liquid (49, 77).

3. The membrane filter (2, 19, 32, 57, 63, 78) according to one of the preceding claims, **characterized in that** the foot element (3, 21, 34, 65) has a tubular jacket (39), and the housing (26, 43, 60, 70) consists of the jacket (39) and a tube (44) that adjoins the jacket (39) at the top.

4. The membrane filter (2, 19, 32, 57, 63, 78) according to one of the preceding claims, **characterized in that**, in each of the membrane units (16, 29, 45, 56, 73, 87), the housing (26, 43, 60, 70) of a lowermost membrane element (47, 61, 75, 93) adjoins the geyser element (9, 30, 46) at the top, and that the geyser element (9, 30, 46) has a flow channel (48) for letting the liquid (49, 77) into the lowermost membrane element (47, 61, 75, 93).

5. The membrane filter (2, 19, 32, 57, 63, 78) according to one of the preceding claims, **characterized in that**, in each of the membrane units (16, 29, 45, 56, 73, 87), the respective housings (26, 43, 60, 70) of two membrane elements (1, 18, 31, 59, 62, 79) arranged one on top of the other adjoin each other.

6. The membrane filter (2, 19, 32, 57, 63, 78) according to one of the preceding claims, **characterized in that**, in each of the membrane units (16, 29, 45, 56, 73, 8), those membrane elements (1, 18, 31, 59, 62, 79) installed under another membrane element (1, 18, 31, 59, 62, 79) each have an intermediate element (72) on the housing (26, 43, 60, 70) at the top that at the bottom plunges into the respective housing (26, 43, 60, 70) of the membrane element (1, 18, 31, 59, 62, 7) installed thereover to adjust the height given a thermal expansion inside of the membrane units (16, 29, 45, 56, 73, 87).

7. The membrane filter (2, 19, 32, 57, 63, 78) according to one of the preceding claims, **characterized in that** several of the membrane units (16, 29, 45, 56, 73, 87) are installed one next to the other in a module rack, wherein the permeate outlets of membrane elements (1, 18, 31, 59, 62, 79) positioned at the same height are each connected to a shared permeate collection line (76).

8. The membrane filter (2, 19, 32, 57, 63, 78) according to one of the preceding claims, **characterized in that** the outlet device (11, 51, 90) has a throttle lift channel (12, 52, 91), in which, if a level of the liquid (49, 77) in the gas collection chamber (10, 50, 84) is dipped below, the gas (13, 83) initially flows downwardly out of the gas collection chamber (10, 50, 84) and is upwardly deflected to the liquid level.

9. A method for filtering a liquid (49, 77) in a membrane filter (2, 19, 32, 57, 63, 78) submerged into the liquid (49, 77) and having membrane elements (1, 18, 31, 59, 62, 79) and geyser elements (9, 30, 46), wherein, in each of the membrane elements (1, 18, 31, 59, 62, 79),
- a liquid permeate (6, 37, 69, 81) is filtered out of the liquid (49, 77) in a lumens (5, 24, 35, 67) of hollow-fiber membranes (4, 20, 33, 64, 82) that are fastened in a foot element (3, 21, 34, 65),
- the permeate (6, 37, 69, 81) is collected from the lumens (5, 24, 35, 67) in a permeate collection chamber (7, 23, 36, 66),
- a tubular housing (26, 43, 60, 70) envelops the hollow-fiber membranes (4, 20, 33, 64, 82) of the membrane element (1, 18, 31, 59, 62, 79),
- the permeate (6, 37, 69, 81) is drained from the permeate collection chamber (7, 23, 36, 66) through the housing (26, 43, 60, 70), and
- the hollow-fiber membranes (4, 20, 33, 64, 82) are flushed with a gas (13, 83),
and wherein the gas (13, 83) is continuously let into each of the geyser elements (9, 30, 46) and again flows out of the geyser element (9, 30, 46) in pulses, in that it cyclically
a. fills a gas volume located in the gas collection chamber (10, 50, 84) of the geyser element (9, 30, 46) and downwardly bounded by a level (85) of the liquid (49, 77), and in the process displaces the liquid (49, 77) from the top down out of the gas collection chamber (10, 50, 84),
b. then flows upwardly out of the gas collection chamber (10, 50, 84) from the geyser element (9, 30, 46),
c. while the liquid (49, 77) continues to flow into the gas collection chamber (10, 50, 84) from below until the gas (13, 83) stops flowing out,
and wherein the gas (13, 83) flowing out in pulses flows into one of the membrane elements (1, 18, 31, 59, 62, 79) from below, **characterized in that** the gas (13, 83) flows in pulses through membrane units (16, 29, 45, 56, 73, 87) in which a respective one of the geyser elements (9, 30, 46) is arranged, with several of the membrane elements (1, 18, 31, 59, 62,79) being arranged one on top of the other thereover.

## Revendications

1. Filtre à membrane (2, 19, 32, 57, 63, 78), destiné à une utilisation en milieu immergé, pour filtrer un liquide (49, 77), doté
d'éléments membranaires (1, 18, 31, 59, 62, 79) et d'éléments de geyser (9, 30, 46), destinés au rinçage par impulsions des éléments membranaires (1, 18, 31, 59, 62, 79) avec un gaz (13, 83), chacun des éléments membranaires (1, 18, 31, 59, 62, 79) présentant les caractéristiques suivantes :
- des membranes à fibres creuses (4, 20, 33, 64, 82), fixées dans un élément de pied (3, 21, 34, 65), présentant chacune une lumière (5, 24, 35, 67), dans laquelle un perméat liquide (6, 37, 69, 81) peut être filtré hors du liquide (49, 77),
- un espace collecteur (7, 23, 36, 66) de perméat, qui est relié avec les lumières (5, 24, 35, 67) des membranes à fibres creuses (4, 20, 33, 64, 82), pour collecter le perméat (6, 37, 69, 81) hors des membranes à fibres creuses (4, 20, 33, 64, 82),
- une sortie (8, 25, 38, 68) de perméat, destinée à évacuer le perméat (6, 37, 69, 81) hors de l'espace collecteur (7, 23, 36, 66) de perméat et
- un boîtier (26, 43, 60, 70) de forme tubulaire, qui entoure les membranes à fibres creuses (4, 20, 33, 64, 82) de l'élément membranaire (1, 18, 31, 59, 62, 79) et qui est traversé par la sortie (8, 25, 38, 68) de perméat,
et les éléments de geyser (9, 30, 46) étant installés en-dessous des éléments membranaires (1, 18, 31, 59, 62, 79) et chacun des éléments de geyser (9, 30, 46) présentant les caractéristiques suivantes :
- un espace collecteur (10, 50, 84) de gaz, ouvert vers le bas,
- un dispositif de sortie (11, 51, 90), destiné à faire sortir par impulsions le gaz (13, 83) vers le haut hors de l'espace collecteur (10, 50, 84) de gaz,
**caractérisé par** des unités membranaires (16, 29, 45, 56, 73, 87), dans chacune desquelles l'un des éléments de geyser (9, 30, 46) et par-dessus, plusieurs des éléments membranaires (1, 18, 31, 59, 62, 79) sont placés en superposition.

2. Filtre à membrane (2, 19, 32, 57, 63, 78) selon la revendication précédemment citée, **caractérisé en ce que** les membranes à fibres creuses (4, 20, 33, 64, 82) sont fermées individuellement sur le haut et flottent librement dans le liquide (49, 77).

3. Filtre à membrane (2, 19, 32, 57, 63, 78) selon l'une quelconque des revendications précédemment citées, **caractérisé en ce que** l'élément de pied (3, 21, 34, 65) présente une enveloppe (39) de forme tubulaire et le boîtier (26, 43, 60, 70) est constitué de l'enveloppe (39) et d'un tube (44), qui se raccorde sur le haut sur l'enveloppe (39).

4. Filtre à membrane (2, 19, 32, 57, 63, 78) selon l'une quelconque des revendications précédemment citées, **caractérisé en ce que** dans chacune des unités membranaires (16, 29, 45, 56, 73, 87), le boîtier (26, 43, 60, 70) d'un élément membranaire (47, 61, 75, 93) le plus bas se raccorde sur le haut sur l'élément de geyser (9, 30, 46) et **en ce que** l'élément de geyser (9, 30, 46) présente un canal d'écoulement (48), destiné à introduire le liquide (49, 77) dans l'élément membranaire (47, 61, 75, 93) le plus bas.

5. Filtre à membrane (2, 19, 32, 57, 63, 78) selon l'une quelconque des revendications précédemment citées, **caractérisé en ce que** dans chacune des unités membranaires (16, 29, 45, 56, 73, 87) chaque fois les boîtiers (26, 43, 60, 70) de deux éléments membranaires (1, 18, 31, 59, 62, 79) superposés l'un sur l'autre se raccordent l'un à l'autre.

6. Filtre à membrane (2, 19, 32, 57, 63, 78) selon l'une quelconque des revendications précédemment citées, **caractérisé en ce que** dans chacune des unités membranaires (16, 29, 45, 56, 73, 87), les éléments membranaires (1, 18, 31, 59, 62, 79), qui sont installés en-dessous d'un autre élément membranaire (1, 18, 31, 59, 62, 79) présentent chacun sur le haut sur le boîtier (26, 43, 60, 70) un élément intermédiaire (72), qui est immergé par le bas dans le boîtier (26, 43, 60, 70) respectif de l'élément membranaire (1, 18, 31, 59, 62, 79) installé au-dessus, pour la compensation de hauteur lors d'une dilatation thermique à l'intérieur des unités membranaires (16, 29, 45, 56, 73, 87).

7. Filtre à membrane (2, 19, 32, 57, 63, 78) selon l'une quelconque des revendications précédemment citées, **caractérisé en ce que** plusieurs des unités membranaires (16, 29, 45, 56, 73, 87) sont installées côte à côte dans un châssis modulaire, les sorties de perméat d'éléments membranaires (1, 18, 31, 59, 62, 79) positionnés sur une hauteur étant raccordées chacune sur une conduite collectrice (76) de perméat conjointe.

8. Filtre à membrane (2, 19, 32, 57, 63, 78) selon l'une quelconque des revendications précédemment citées, **caractérisé en ce que** le dispositif de sortie (11, 51, 90) présente un canal de remontée (12, 52, 91) de gaz, dans lequel, dans le cas d'une non atteinte d'un niveau limite du liquide (49, 77) dans l'espace collecteur (10, 50, 84) de gaz, le gaz (13, 83) s'échappe d'abord vers le bas hors de l'espace collecteur (10, 50, 84) de gaz et à hauteur du niveau limite, est dévié vers le haut.

9. Procédé, destiné à filtrer un liquide (49, 77) dans un filtre à membrane (2, 19, 32, 57, 63, 78) immergé dans le liquide (49, 77), doté d'éléments membranaires (1, 18, 31, 59, 62, 79) et d'éléments de geyser (9, 30, 46), dans chacun des éléments membranaires (1, 18, 31, 59, 62, 79)
- un perméat liquide (6, 37, 69, 81) étant filtré hors du liquide (49, 77) dans une lumière (5, 24, 35, 67) de membranes à fibres creuses (4, 20, 33, 64, 82) qui sont fixées dans un élément de pied (3, 21, 34, 65),
- le perméat (6, 37, 69, 81) étant collecté hors des lumières (5, 24, 35, 67) dans un espace collecteur (7, 23, 36, 66) de perméat,
- un boîtier (26, 43, 60, 70) de forme tubulaire entourant les membranes à fibres creuses (4, 20, 33, 64, 82) de l'élément membranaire (1, 18, 31, 59, 62, 79),
- le perméat (6, 37, 69, 81) étant évacué à travers le boîtier (26, 43, 60, 70) hors de l'espace collecteur (7, 23, 36, 66) de perméat et
- les membranes à fibres creuses (4, 20, 33, 64, 82) étant rincées par un gaz (13, 83),
et dans chacun des éléments de geyser (9, 30, 46), le gaz (13, 83) étant introduit en continu et s'échappant de nouveau par impulsions hors de l'élément de geyser (9, 30, 46), en ce que cycliquement
a. il remplit un volume de gaz se trouvant dans un espace collecteur (10, 50, 84) de gaz de l'élément de geyser (9, 30, 46), délimité vers le bas par un niveau (85) du liquide (49, 77) et refoule à cet effet le liquide (49, 77) du haut vers le bas, hors de l'espace collecteur (10, 50, 84) de gaz,
b. il s'échappe ensuite hors de l'espace collecteur (10, 50, 84) de gaz vers le haut, hors de l'élément de geyser (9, 30, 46),
c. pendant que le liquide (49, 77) afflue en poursuite par le bas dans l'espace collecteur (10, 50, 84) de gaz, jusqu'à ce que l'échappement du gaz (13, 83) s'arrête,
et le gaz (13, 83) s'échappant par impulsions affluant par le bas dans l'un des éléments membranaires (1, 18, 31, 59, 62, 79), **caractérisé en ce que** le gaz (13, 83) circule par impulsions à travers des unités membranaires (16, 29, 45, 56, 73, 87), dans lesquelles chaque fois l'un des éléments de geyser (9, 30, 46) et par-dessus plusieurs des éléments membranaires (1, 18, 31, 59, 62, 79) sont placés en superposition.
